# EUROPÄISCHE PATENTSCHRIFT

(11) **EP 3 362 340 B1**
(45) Veröffentlichungstag und Bekanntmachung des Hinweises auf die Patenterteilung: **24.03.2021**
(21) Anmeldenummer: 16767292.2
(22) Anmeldetag: 20.09.2016
(51) Int. Cl.: B62J 7/08, B62J 9/00

(54) **HALTEVORRICHTUNG SOWIE DAFÜR GEEIGNETES PACKMITTEL**
HOLDING DEVICE AND PACKAGE SUITABLE THEREFOR
DISPOSITIF DE RETENUE ET MOYEN D'EMBALLAGE ADAPTÉ

(30) Priorität: 13.10.2015 DE 102015117420
(43) Veröffentlichungstag der Anmeldung: 22.08.2018
(73) Patentinhaber: Fink, Johann, 93480 Hohenwarth (DE); Fink, Patrick, 93480 Hohenwarth (DE)
(72) Erfinder: Fink, Johann, 93480 Hohenwarth (DE); Fink, Patrick, 93480 Hohenwarth (DE)
(74) Vertreter: Glück Kritzenberger Patentanwälte PartGmbB
(86) Internationale Anmeldenummer: PCT/EP2016/072298
(87) Internationale Veröffentlichungsnummer: WO 2017/063825

(56) Entgegenhaltungen:
- EP-A1- 0 760 332
- EP-A1- 2 636 581
- DE-A1- 19 608 832
- FR-A1- 2 495 092

## Beschreibung

Die vorliegende Erfindung betrifft eine Haltevorrichtung zur lösbaren Befestigung eines zumindest einen Montageabschnitt mit zumindest einer Montageöffnung aufweisenden Packmittels an einem Gepäckträger eines Zweirads, insbesondere eines Fahrrads oder eines Motorrads.

Zum Mitführen von Packmitteln, wie beispielweise Kisten, Taschen, Koffer, Rucksäcke oder dergleichen Behältnisse an einem Zweirad, insbesondere an einem Fahrrad oder Motorrad, sind aus dem Stand der Technik verschiedenste Haltevorrichtungen bzw. Haltesysteme bekannt, die eine insbesondere lösbar ausgebildete Befestigung des entsprechenden Packmittels an dem Gepäckträger des Zweirades ermöglichen. Besonderer Beliebtheit erfreuen sich dabei Haltesysteme, bei denen die Packmittel lösbar und einfach an dem Gepäckträger befestigt, justiert und wieder abgenommen werden können, wie dies beispielsweise aus der Druckschrift EP 2 586 684 A1, der Druckschrift DE 196 08 832 A1 sowie der Druckschrift FR 2 495 092 A1 bekannt geworden ist Dokument DE 196 08 832 A1 zeigt die Präambel des Anspruchs 1.

Ausgehend hiervon ist es Aufgabenstellung der vorliegenden Erfindung, eine Haltevorrichtung zur lösbaren Befestigung eines Packmittels an einem Gepäckträger eines Zweirads anzugeben, die eine Verbesserung in der Handhabung und dem konstruktiven Aufbau aus dem Stand der Technik bekannter Haltevorrichtungen bietet und zudem eine lösbare Befestigung eines besonders kostengünstig herstellbaren Packmittels ermöglicht. Diese Aufgabe wird mit den Merkmalen des Patentanspruches 1 gelöst. Die Unteransprüche betreffen dabei besonders bevorzugte Ausführungsvarianten der Erfindung.

Der wesentliche Aspekt der vorliegenden Erfindung ist dabei darin zu sehen, eine Haltevorrichtung zur lösbaren Befestigung eines zumindest einen Montageabschnitt mit zumindest einer Montageöffnung aufweisenden Packmittels an einem Gepäckträger eines Zweirads vorzuschlagen, aufweisend wenigstens eine sich entlang einer Längsachse L erstreckende Befestigungseinrichtung mit mindestens einem Befestigungsabschnitt zur lösbaren Befestigung der Haltevorrichtung an dem Gepäckträger des Zweirads und mindestens einen sich entlang der Längsachse L an den Befestigungsabschnitt anschließenden Aufnahmeabschnitt , auf den das Packmittel über die Montageöffnung des Montageabschnittes entlang der Längsachse L aufschiebbar ist und der einen Umfangsquerschnitt aufweist, der zur verdrehungssicheren Aufnahme des Montageabschnittes des Packmittels auf dem Aufnahmeabschnitt an den Querschnitt der zumindest einen Montagöffnung des Montageabschnittes angepasst ist, sowie ein Verriegelungselement zur Verriegelung des Packmittels an dem Aufnahmeabschnitt, wobei das Verriegelungselement derart an dem Aufnahmeabschnitt angeordnet ist, dass dieses relativ zum Aufnahmeabschnitt zwischen einer Verriegelungsposition und einer Freigabeposition dreh- oder schwenkbar ist, und zwar derart, dass in der Verriegelungsposition eine Verschiebung des auf dem Aufnahmeabschnitt aufgeschobenen Packmittels entlang der Längsachse L gesperrt und in der Freigabeposition freigegeben ist. Besonders vorteilhaft wird dadurch eine einfach und robust aufgebaute Haltevorrichtung bereitgestellt, die eine universelle Anordnung verschiedenster Packmittel, beispielweise Kisten, Taschen, Koffer, Rucksäcke oder sonstige Behältnisse zur Aufnahme von Gütern, an der Haltevorrichtung ermöglicht.

Besonders vorteilhaft kann das Verriegelungselement relativ zum Aufnahmeabschnitt zwischen der Verriegelungsposition und der Freigabeposition um die Längsachse dreh- oder schwenkbar ausgebildet sein.

Weiterhin vorteilhaft kann das Verriegelungselement einen Außenumfangsquerschnitt aufweisen, der an den Umfangsquerschnitt des Aufnahmeabschnittes derart angepasst ist, dass der Aufnahmeabschnitt und das Verriegelungselement zumindest an ihren jeweils aufeinander zugewandten freien Stirnseiten kongruente Stirnflächen zueinander ausbilden.

In einer Ausführungsvariante der Erfindung kann das Verriegelungselement derart relativ dreh- oder schwenkbar entlang der Längsachse an dem Aufnahmeabschnitt vorgesehen sein, dass das Verriegelungselement in der Freigabeposition fluchtend zu dem Aufnahmeabschnitt angeordnet ist.

Gemäß einer nochmals vorteilhaften Ausführungsvariante der Erfindung kann die Befestigungseinrichtung eine Spanneinrichtung zur Erzeugung einer definierten Vorspannkraft aufweisen, die zwischen dem Aufnahmeabschnitt und dem Verriegelungselement in Richtung des Aufnahmeabschnittes wirkt. Bevorzugt kann die Spanneinrichtung hierbei dazu ausgebildet sein, die Vorspannkraft derart zu erzeugen, dass das Verriegelungselement dreh- und längsbeweglich an dem Aufnahmeabschnitt vorgesehen ist.

Weiterhin vorteilhaft kann die Befestigungseinrichtung an der dem Befestigungsabschnitt abgewandten Seite einen sich entlang der Längsachse an den Aufnahmeabschnitt anschließenden Führungsschaft aufweisen, an dem das Verrieglungselement dreh- und längsbeweglich angeordnet ist.

Wiederum bevorzugt können an dem Führungsschaft Führungsbolzen vorgesehen sein, die in der Verriegelungsposition bzw. der Freigabeposition in einen in dem Verriegelungselement vorgesehenen entsprechenden Führungskonturabschnitt derart eingreifen, dass das Verriegelungselement in der Verriegelungsposition bzw. der Freigabeposition für eine Drehbewegung um die Längsachse gesperrt ist.

Auch vorteilhaft kann der Befestigungsabschnitt wenigstens eine Befestigungskralle zur lösbaren Anordnung der Haltevorrichtung an dem Gepäckträger des Zweirads aufweisen, die in Richtung des Verriegelungselementes gerichtet ist.

Erfindungsgemäß sind zwei Befestigungseinrichtungen mittels einer Verbindungseinrichtung derart mechanisch verbunden, dass eine relativ zwischen den beiden Befestigungseinrichtungen entlang deren jeweiligen Längsachsen verlaufende Stellbewegung erzeugbar ist. Besonders vorteilhaft kann die Stellbewegung als Spreizbewegung zur lösbaren Anordnung der Haltevorrichtung an dem Gepäckträger des Zweirads ausgebildet sein. Weiterhin erfindungsgemäß umfasst die Verbindungsvorrichtung zur Erzeugung der Stellbewegung wenigstens eine erste und eine zweite Gewindestange, eine Verstellmutter sowie eine Kontermutter.

Die Ausdrucke "näherungsweise", "im Wesentlichen", "ca." oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine schematische Schnittdarstellung einer ausschnittweise gezeigten erfindungsgemäßen Haltevorrichtung
- Fig. 2: beispielhaft eine schematische Explosivdarstellung einer Haltevorrichtung
- Fig. 3: beispielhaft eine schematische Seitenansicht eines Verriegelungselements
- Fig. 4: beispielhaft eine weitere Ausführungsvariante mit zwei Befestigungseinrichtungen in einer schematischen Seitenansicht
- Fig. 5: beispielhaft eine schematische Seitendarstellung eines Packmittels für eine erfindungsgemäße Haltevorrichtung.

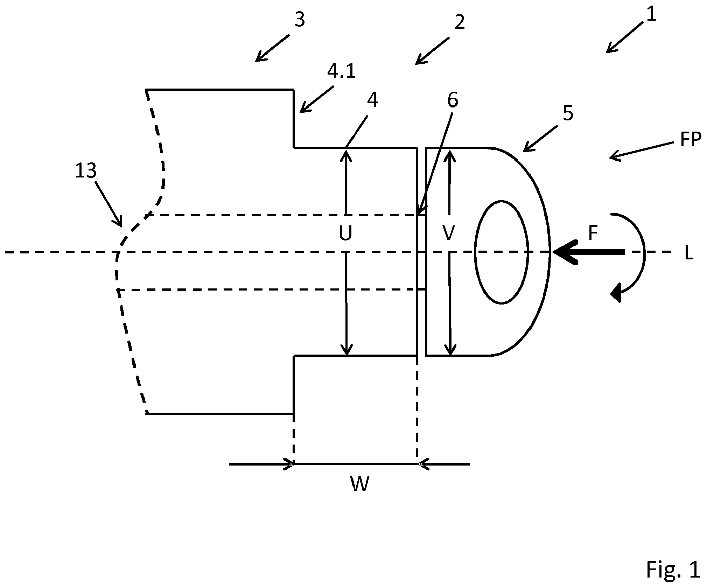

In den Figuren 1 bis 5 ist mit Bezugszeichen 1 eine Haltevorrichtung zur lösbaren Befestigung eines zumindest einen Montageabschnitt 41 mit zumindest einer Montageöffnung 42 aufweisenden Packmittels 40 an einem Gepäckträger eines Zweirads gezeigt. Besonders bevorzugt kann die erfindungsgemäße Haltevorrichtung 1 dabei an dem Gepäckträger eines Fahrrads oder Motorrads angeordnet, d.h. lösbar befestigt, werden. Ferner kann vorgesehen sein, dass die erfindungsgemäße Haltevorrichtung 1 als Nachrüstvorrichtung ausgebildet ist, die nachträglich an einen bereits verbauten Gepäckträger eines Zweirads als Nachrüstteil befestigt wird.

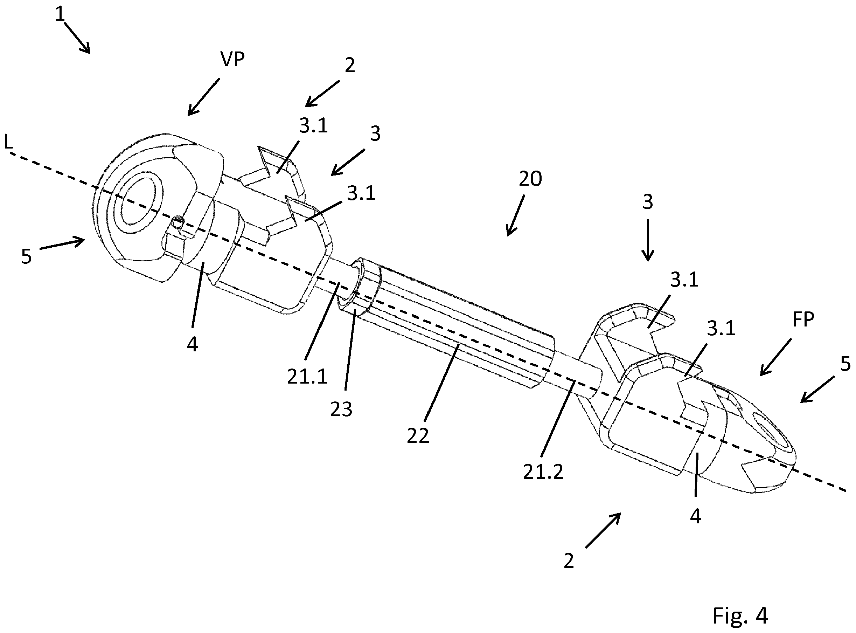

Die Haltevorrichtung 1 weist hierbei wenigstens eine sich entlang einer Längsachse L erstreckende Befestigungseinrichtung 2 mit mindestens einem Befestigungsabschnitt 3 zur lösbaren Befestigung der Haltevorrichtung 1 an dem Gepäckträger des Zweirads auf. Weiterhin weist die Befestigungseinrichtung 2 mindestens einen sich entlang der Längsachse L an den Befestigungsabschnitt 3 anschließenden Aufnahmeabschnitt 4 auf, auf den das in Figur 4 dargestellte Packmittel 40 über die Montageöffnung 42 des Montageabschnittes 41 entlang der Längsachse L aufschiebbar ist. Zudem weist der Aufnahmeabschnitt 4 vorzugsweise entlang der Längsachse L einen Umfangsquerschnitt U auf, der zur verdrehungssicheren Aufnahme des Montageabschnittes 41 des Packmittels 40 auf dem Aufnahmeabschnitt 4 an den Querschnitt M der zumindest einen Montagöffnung 42 des Montageabschnittes 41 angepasst ist.

In anderen Worten entspricht damit der Umfangsquerschnitt U des Aufnahmeabschnittes 4 im Wesentlichen dem Querschnitt M der Montageöffnung 42 des Packmittels 40, so dass das Packmittel 40 dadurch verdrehsicher und weitgehend formschlüssig mit seiner Montageöffnung 42 auf den Aufnahmeabschnitt 4 aufgeschoben bzw. aufgenommen werden kann. Die geometrische Formgestaltung der beiden Querschnitte, also des Umfangsquerschnittes U sowie des Querschnittes M sind dabei in weiten Grenzen frei wählbar bzw. einstellbar. Beispielweise kann die geometrische Formgestaltung dreieckig, rechteckig, quadratisch oder polygonal ausgebildet sein. Bevorzugt ist die geometrische Formgestaltung der beiden Querschnitte U, M jedoch elliptisch ausgebildet und weist einen Längendurchmesser zwischen 2cm und 10cm, besonders bevorzugt zwischen 3cm und 7cm, und einen Breitendurchmesser zwischen 1cm und 5cm, besonders bevorzugt zwischen 1,5cm und 3cm, auf.

Ferner bildet die Haltevorrichtung 1 im Übergangsbereich zwischen dem Befestigungsabschnitt 2 und dem sich entlang der Längsachse L anschließenden Aufnahmeabschnitt 4 eine um den Umfangsquerschnitt U zumindest teilweise umlaufende Anlagenfläche 4.1 aus, die vorzugsweise rechtwinklig zur Längsachse L orientiert ist, sich also orthogonal zur Längsachse L erstreckt, und an der das Packmittel 40 in einem montierten Zustand zur Anlage gelangt, und zwar mit seinem Montageabschnitt 41. Die Anlagefläche 4.1 bildet damit beim Aufschieben des Packmittels 40 entlang der Längsachse L einen mechanischen Anschlag aus, an dem das Packmittel 40 insbesondere mit seinem Montageabschnitt 41 zur Anlage gelangt.

Besonders vorteilhaft ist dabei die Längserstreckung des Aufnahmeabschnittes 4 entlang der Längsachse L an eine Wandstärke W des Packmittels 40 im Bereich der Montageöffnung 42 des Montageabschnittes 41 angepasst und zwar derart, dass die Längserstreckung des Aufnahmeabschnittes 4 entlang der Längsachse L näherungsweise der Wandstärke W des Packmittels 40 wenigstens im Bereich der Montageöffnung 42 des Montageabschnittes 41 entspricht.

Ferner weist die erfindungsgemäße Haltevorrichtung 1 ein Verriegelungselement 5 zur Verriegelung des Packmittels 40 an dem Aufnahmeabschnitt 4 auf, wobei das Verriegelungselement 5 derart an dem Aufnahmeabschnitt 4 angeordnet ist, dass dieses relativ zum Aufnahmeabschnitt 4 zwischen einer Verriegelungsposition VP und einer Freigabeposition FP dreh- oder schwenkbar ausgebildet ist, und zwar derart, dass in der Verriegelungsposition VP eine Verschiebung des auf dem Aufnahmeabschnitt 4 aufgeschobenen Packmittels 40 entlang der Längsachse L gesperrt und in der Freigabeposition FP freigegeben ist.

In der Darstellung der Figur 1 ist die Haltevorrichtung 1 dabei in der Freigabeposition FP abgebildet, in der das auf den Aufnahmeabschnitt 4 aufgeschobenen Packmittel 40 für ein Abnehmen, insbesondere Abziehen, von dem Aufnahmeabschnitt 4 durch das Verriegelungselement 5 freigegeben ist. Besonders bevorzugt ist dabei der Umfangsquerschnitt U des Aufnahmeabschnitts 4 an einen Außenumfangsquerschnitt V des Verriegelungselements 5, also an dessen geometrische Außenkontur, derart angepasst, dass die jeweiligen Umfangsquerschnitte U, V zumindest in ihren gegenüberliegenden Bereichen, also den aufeinander zugewandten freien Stirnflächen des Aufnahmeabschnitts 4 und des Verriegelungselements 5, kongruente freie Stirnflächen zueinander ausbilden, so dass sich eine stufenlos und eben ausgebildete Übergangsfläche zwischen dem Aufnahmeabschnitt 4 und dem Verriegelungselement 5 ausbildet.

Dabei kann das Verriegelungselement 5 derart relativ dreh- oder schwenkbar zu dem Aufnahmeabschnitt 4 vorgesehen bzw. an diesem angeordnet sein, dass das Verriegelungselement 5 in der Freigabeposition FP mit seinem Außenumfangsquerschnitt V in einer Seitenansicht fluchtend, d. h. flächengleich bzw. kongruent, zu dem Aufnahmeabschnitt 4 angeordnet ist. Besonders vorteilhaft ist dabei das Verriegelungselement 5 an dem Aufnahmeabschnitt 4 um die Längsachse L dreh- oder schwenkbar angeordnet. Weiterhin vorteilhaft ist das Verriegelungselement 5 für die Verrieglungsposition VP um vorzugsweise 90° relativ zur Freigabeposition FP verdrehbar bzw. verschwenkbar und zwar in beiden möglichen Dreh- bzw. Schwenkrichtungen.

Weisen die beiden Umfangsquerschnitte U, V beispielweise eine elliptische geometrische Formgestaltung auf, so stellt sich bei einem Verdrehen um die Längsachse L damit in der Verriegelungsposition VP in der Seitenansicht auf die erfindungsgemäße Haltevorrichtung 1 eine durch den Aufnahmeabschnitt 4 sowie dem Verriegelungselement 5 gebildete Kreuz- bzw. Plusform ein, so dass es dadurch letztlich zu einer Sperrung des Packmittels 40 entlang der Längsachse L kommt. Dies deshalb, da das Packmittel 40 dann mit der einen Wandseite einer Seitenwandung 44 des Montageabschnittes 41 an der Anlagenfläche 4.1 und mit der gegenüberliegenden Wandseite an dem Verriegelungselement 5 anliegt und damit vor einem Verschieben entlang der Längsachse L gesperrt ist.

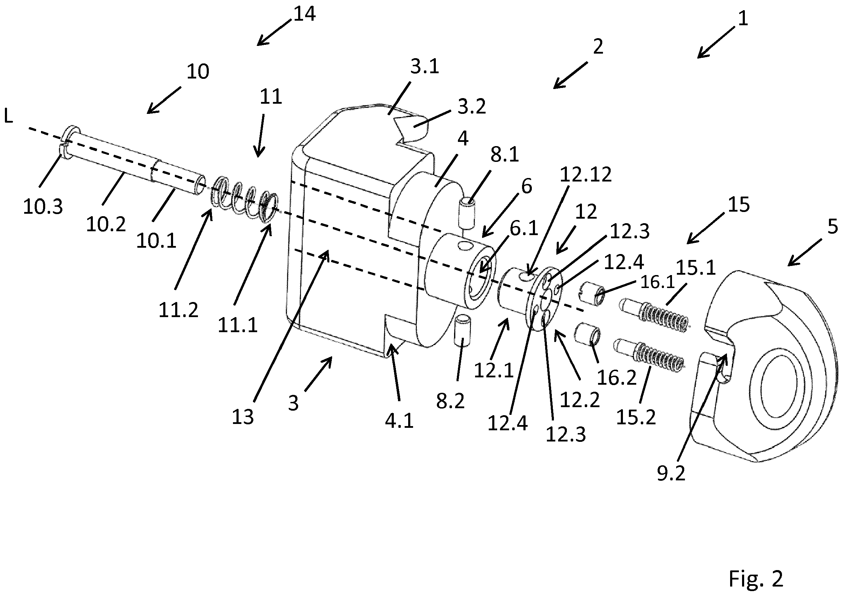

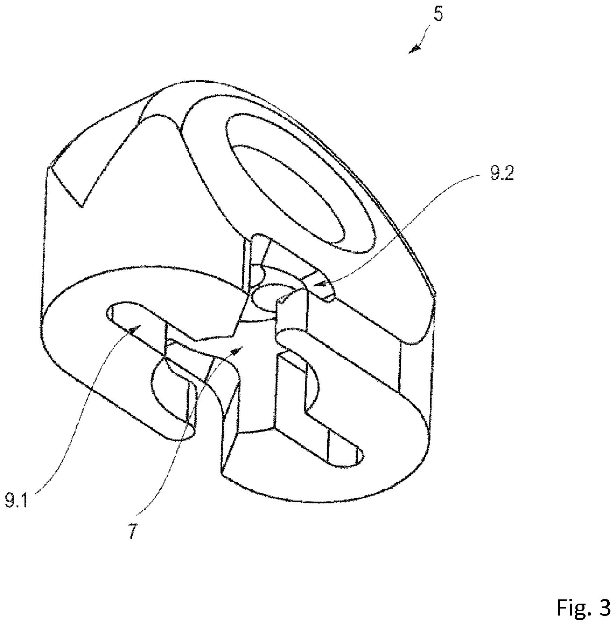

Wie der Figur 2 zu entnehmen ist, kann die Befestigungseinrichtung 2 an dem Aufnahmeabschnitt 4 einen sich in Richtung des Verriegelungselements 5 und entlang der Längsachse L erstreckenden ösenartigen Führungsschaft 6 aufweisen, auf bzw. an dem das Verriegelungselement 5 dreh- und/oder längsbeweglich aufgeschoben bzw. angeordnet werden kann, indem die Befestigungseinrichtung 2 mit seinem Führungsschaft 6 in eine mit diesem korrespondierende Aufnahmeöffnung 7, gezeigt in Figur 3, eingreift, die im Verriegelungselement 5 vorgesehen ist. Der Führungsschaft 6 kann dabei einteilig, insbesondere einstückig mit der Befestigungseinrichtung 2 ausgebildet sein.

Weiterhin befinden sich an dem Führungsschaft 6, und zwar auf bevorzugt um 180° gegenüberliegenden Bereichen, Führungsbolzen 8.1, 8.2 angeordnet, die vorzugsweise rechtwinklig zur Längsachse L verlaufen. Die fest an dem Führungsschaft 6 angeordneten Führungsbolzen 8.1, 8.2 greifen dabei in der jeweiligen Freigabeposition FP bzw. Verriegelungsposition VP in einen in dem Verriegelungselement 5 vorgesehenen Führungskonturabschnitt 9.1, 9.2 ein, und zwar derart, dass die Führungsbolzen 8.1, 8.2 in der Freigabeposition FP in einen ersten Führungskonturabschnitt 9.1 und in der Verriegelungsposition VP in einen zweiten Führungskonturabschnitt 9.2 eingreifen. Mit anderen Worten wird dabei mittels der Führungskonturabschnitte 9.1, 9.2 ein Verdrehen des Verriegelungselementes 5 relativ zum Aufnahmeabschnitt 4 in der jeweiligen Freigabeposition FP bzw. Verriegelungsposition VP mechanisch verhindert, indem die Führungsbolzen 8.1, 8.2 in dem entsprechenden Führungskonturabschnitt 9.1, 9.2 formschlüssig zwangsgeführt aufgenommen sind. Ferner ist der zweite Führungskonturabschnitt 9.2 des Verriegelungselements 5, in den die Führungsbolzen 8.1, 8.2 in der Verriegelungsposition VP eingreifen, als Bajonettverschluss ausgebildet, derart, dass die Führungsbolzen 8.1, 8.2 den zweiten Führungskonturabschnitt 9.2 in der stationären Verriegelungsposition VP hintergreifen, so dass eine Längsverschiebung des Verriegelungselementes 5 entlang der Längsachse L in der Verriegelungsposition VP verhindert wird, d. h. nicht möglich ist.

Besonders vorteilhaft kann dabei das Verriegelungselement 5 mittels einer in Figur 2 nähergehend dargestellten Spanneinrichtung 14 zur Erzeugung einer Vorspannkraft F zwischen dem Aufnahmeabschnitt 4 und dem Verriegelungselement 5 an dem Aufnahmeabschnitt 4 drehbar angeordnet sein, und zwar vorzugsweise drehbar um die Längsachse L sowie längsbeweglich entlang der Längsachse L. Dabei ist die Spanneinrichtung 14 dazu eingerichtet, das Verriegelungselement 5 unter der definierten Vorspannkraft F gegen den Aufnahmeabschnitt 4 zu drücken und zudem einen selbsttägigen Rückzug des Verriegelungselementes 5 in Richtung des Aufnahmeabschnittes 4 entlang der Längsachse L, also eine Längsbeweglichkeit, sicherzustellen. Die Spanneinrichtung 14 weist hierfür wenigstens einen Gewindebolzen 10 sowie wenigstens ein Spannmittel 11, beispielweise eine Druckfeder, auf. Der Gewindebolzen 10 seinerseits weist wiederum einen Gewindeabschnitt 10.1 sowie einen gewindelosen Halteabschnitt 10.2 auf, auf den das Spannmittel 11 aufschiebbar ist. Weiterhin kann die Spanneinrichtung 14 eine ösenartige Rastscheibe 12 aufweisen, die mit ihrem Ösenabschnitt 12.1 in eine offene freie Stirnseite des Führungsschaftes 6 einschiebbar ist und mit ihrem Scheibenabschnitt 12.2 einen mechanischen Anschlag an der freien Stirnseite des Führungsschaftes 6 ausbildet. Die Rastscheibe 12 kann dabei mittels der Führungsbolzen 8.1, 8.2 verdrehsicher in dem Führungsschaft 6 aufgenommen sein, indem die Führungsbolzen 8.1, 8.2 in an dem Ösenabschnitt 12.1 vorgesehene Ösenöffnungen 12.12 eingreifen, beispielsweise verschraubt, verklebt, verpresst oder verlötet oder verschweißt sind. Dabei kann der Ösenabschnitt 12.1 in seiner Längserstreckung entlang der Längsachse L und seinem Querschnitt insbesondere an die Längserstreckung sowie Querschnitt des Führungsschaftes 6 angepasst sein, indem die Längserstreckung des Ösenabschnittes 12.1 der Längserstreckung des Führungsschaftes 6 entlang der Längsachse L und der Innenquerschnitt des Führungsschaftes 6 dem Außenquerschnitt des Ösenabschnittes 12.1 entspricht bzw. näherungsweise entspricht.

Dabei kann der Gewindebolzen 10 durch eine sich in der Befestigungseinrichtung 2 entlang der Längsachse L erstreckende, in Figur 2 nur schematisch angedeutete, Durchgangsöffnung 13 eingeschoben, also aufgenommen, sein. Die Durchgangsöffnung 13 durchdringt dabei insbesondere den Befestigungsabschnitt 3, den Aufnahmeabschnitt 4 sowie den Führungsschaft 6, so dass sich damit die Durchgangsöffnung 13 entlang der Längsachse L zumindest teilweise durch die Befestigungseinrichtung 2 hindurch erstreckt und insbesondere an dem freien Ende des Führungsschaftes 6 ein offenes Ende 6.1 ausbildet, in das die Rastscheibe 12 mit ihrem Ösenabschnitt 12.1 einschiebbar ist.

Der Gewindebolzen 10 kann dabei mit einem an seinem Halteabschnitt 10.2 aufgeschobenen Spannmittel 11, insbesondere einer Druckfeder, in die Durchgangsöffnung 13 über den Befestigungsabschnitt 3 eingeführt und mit seinem Gewindeabschnitt 10.1 in der Aufnahmeöffnung 7 des Verriegelungselementes 5 befestigt, insbesondere verschraubt werden. Damit ist die Verschraubung derart ausgebildet, dass der Aufnahmeabschnitt 4 und das Verriegelungselement 5 mittels der Spanneinrichtung 14 unter einer Vorspannkraft F schwimmend gelagert, d. h. insbesondere längsverschiebbar, an dem Verriegelungselement 5 verschraubt sind. Insbesondere stützt sich das Spannmittel 11 im verschraubten Zustand mit seiner ersten Seite 11.1 an der freien Seite des Ösenabschnittes 12.1 und mit seiner zweiten Seite 11.2 an einem Gewindebolzenkopf 10.3 mechanisch ab, und zwar unter der Vorspannkraft F. Der Befestigungsabschnitt 3 sowie der Aufnahmeabschnitt 4 sind damit entlang der Längsachse L sowohl drehbeweglich, als auch axial verschiebbar ausgebildet. Damit wird das Verriegelungselement 5 in seiner jeweiligen Verriegelungsposition VP bzw. Freigabeposition FP mittels der Spanneinrichtung 14 in Richtung des Aufnahmeabschnittes 4 entlang der Längsachse L gezogen und zwar unter der definierten Vorspannkraft F.

Für ein Verdrehen des Verriegelungselementes 5 von der Verriegelungsposition VP in die Freigabeposition FP, bzw. vice versa, muss das Verriegelungselement 5 entgegen der durch das Spannmittel 11 erzeugten Vorspannkraft F entlang der Längsachse L in die dem Aufnahmeabschnitt 4 entgegengesetzte Richtung gezogen werden, bis die jeweiligen Führungsbolzen 8.1, 8.2 außer Eingriff mit dem jeweiligen Führungskonturabschnitt 9.1, 9.2 stehen. Hierbei wird das Spannmittel 11 zusammengepresst und der Gewindebolzen in der Durchgangsöffnung 13 entlang der Längsachse L mit dem Verriegelungselement 5 mitbewegt. Anschließend kann das Verriegelungselement 5 beispielsweise in die Freigabeposition FP verdreht werden. Die Spanneinrichtung 11 sorgt nach einem Verdrehen des Verrieglungselementes 5 für einen selbsttätigen Rückzug in Richtung des Aufnahmeabschnittes 4, wodurch die Führungsbolzen 8.1, 8.2 wiederum in mechanischen Eingriff mit dem jeweiligen Führungskonturabschnitt 9.1, 9.2 gelangen.

Weiterhin kann für ein Verrasten des Verriegelungselements 5 in der jeweiligen Freigabeposition FP bzw. Verriegelungsposition VP eine Rasteinrichtung 15 vorgesehen sein, die wenigstens zwei federnd gelagerte und in dem Verriegelungselement 5 angeordnete Rastbolzen 15.1, 15.2 umfasst, die in an dem Scheibenabschnitt 12.2 der Rastscheibe 12 vorgesehene Rastlöcher 12.3, 12.4 korrespondierend eingreifen und zwar in der jeweiligen Freigabeposition FP bzw. Verriegelungsposition VP. Insbesondere können die Rastbolzen 15.1, 15. 2 hierfür mittels jeweils einer Hohlschraube 16.1, 16.2, also einer ösenartig ausgebildeten Schraube mit einem Außengewinde, jedoch keinem Innengewinde auch bekannt als Madenschrauben, in der Aufnahmeöffnung 7 des Verriegelungselementes 5 derart verschraubt werden, dass die jeweiligen Rastbolzen 15.1, 15.2 axialbeweglich sind.

In Figur 4 ist beispielhaft eine weitere Ausführungsvariante der erfindungsgemäßen Haltevorrichtung 1 mit zwei Befestigungseinrichtungen 2 in einer schematischen Seitenansicht gezeigt, wobei die in Figur 4 links dargestellte Befestigungseinrichtung 2 in der Verriegelungsposition VP und die rechts abgebildete Befestigungseinrichtung 2 in der Freigabeposition FP gezeigt ist. Mechanisch verbunden sind die beiden Befestigungseinrichtungen 2 mittels einer sich vorzugsweise in Verlängerung der jeweiligen Längsachsen L zwischen den beiden Befestigungseinrichtungen 2 erstreckenden Verbindungsvorrichtung 20. Dabei kann mittels der Verbindungseinrichtung 20 zwischen den beiden Befestigungseinrichtungen 2 eine Stellbewegung erzeugt werden, die entlang der jeweiligen Längsachsen L eine Relativbewegung zwischen den beiden Befestigungseinrichtungen 2 ermöglicht. Dabei kann die Verbindungsvorrichtung 20 insbesondere als Spreizvorrichtung ausgebildet sein, die eine Stellbewegung erzeugt, die ein Einspreizen der beiden Befestigungseinrichtungen 2 zwischen zwei Längsstegen des Gepäckträgers des Zweirades ermöglicht. Ferner kann die Verbindungsvorrichtung 20 hierfür wenigstens eine erste und eine zweite Gewindestange 21.1, 21.2, eine Verstellmutter 22 sowie eine Kontermutter 23 umfassen. Die erste und zweite Gewindestange 21.1, 21.2 kann in den jeweiligen Durchgangsöffnungen 13 des entsprechenden Befestigungsabschnittes 3 der beiden Befestigungseinrichtungen 2 aufgenommen, insbesondere eingeschraubt werden. Die aufeinander zugewandten Stirnseiten, bzw. Enden der ersten und zweiten Gewindestange 21.1, 21.2 sind mittels der beiden Gewindestangen 21.1, 21.2 gemeinsam zugeordneten Verstellmutter 22 verbunden, insbesondere ebenfalls verschraubt. Durch Verdrehen der Verstellmutter 22 kann dabei eine Stellbewegung, insbesondere eine Spreizbewegung, zwischen den beiden Befestigungseinrichtungen 2, insbesondere zwischen deren jeweiligen Befestigungsabschnitten 3 erzeugt werden, die die beiden Befestigungseinrichtungen 2 entlang der Längsachse L in entgegensetzte Richtungen auseinanderbewegt, also aufspreizt, und mit ihrem zugeordneten Befestigungskrallen 3.1 in Eingriff mit den Längsstegen des Gepäckträgers des Zweirades bringt.

Hierfür kann an den jeweiligen Befestigungsabschnitten 3 der entsprechenden Befestigungseinrichtung 2 jeweilig wenigstens eine Befestigungskralle 3.1 vorgesehen sein, die insbesondere in Eingriff mit einem nicht dargestellten Längssteg eines Gepäckträgers gebracht werden kann. Die Befestigungskrallen 3.1 weisen dabei jeweils für den Eingriff in den Längssteg des Gepäckträgers eine Anlagenfläche 3.2 auf, die in Richtung des jeweils zugehörigen Verriegelungselementes 5 gerichtet ist. Besonders vorteilhaft weist dabei ein jeder Befestigungsabschnitt 3 einer jeden Befestigungseinrichtung 2 jeweils zwei Befestigungskrallen 3.1 auf, so dass zwei mittels einer Verbindungsvorrichtung 20 verbundene Befestigungseinrichtungen 2 zwischen zwei sich vorzugsweise parallel erstreckenden Längsstegen eines Gepäckträgers eingespreizt werden können. Besonders vorteilhaft kann nach dem Einspreizen die jeweilige Spreizstellung mittels der Kontermutter 23 dauerhaft vor einer ungewollten Stellbewegung der Verbindungsvorrichtung 20 gesichert werden. Besonders vorteilhaft sind dabei an dem Gepäckträger des Zweirads zwei parallel zueinander angeordnete Haltevorrichtungen 1 vorgesehen, die aus jeweils zwei mittels jeweils einer gemeinsamen Verbindungsvorrichtung 20 verbundenen Befestigungseinrichtungen 2 gebildet sind. Damit sind also in dieser Ausführungsvariante 4 Befestigungseinrichtungen 2 vorgesehen.

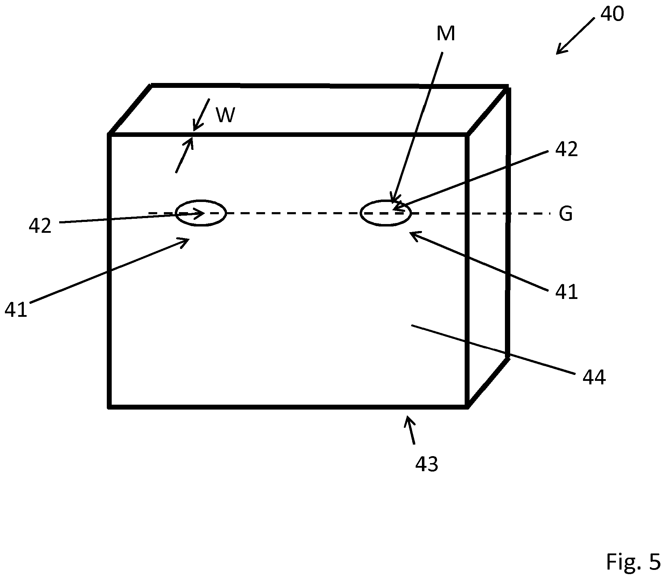

In Figur 5 ist in einer schematischen Seitendarstellung das Packmittel 40 mit zumindest einem Montageabschnitt 41 mit zumindest einer Montageöffnung 42 gezeigt, das dazu eingerichtet ist, an der erfindungsgemäßen Haltevorrichtung gemäß Figuren 1 bis 4 angeordnet zu werden. Insbesondere weist das Packmittel 40 dabei zwei sich entlang einer parallelen Geraden G zur einer Bodenfläche 43 des Packmittels 40 erstreckende Montageabschnitte 41 mit jeweils einer Montageöffnung 42 auf. Weiterhin vorteilhaft ist der zumindest eine Montageabschnitt 41 mit der zumindest einen Montageöffnung 42 in einer Seitenwandung 44 mit der Wandstärke W des Packmittels 40 vorgesehen.

Insbesondere kann das Packmittel 40 als Faltkarton bzw. Faltschachtel aus Wellpappe ausgebildet sein, der die Bodenfläche 43 die wenigstens eine Seitenwandung 44 mit der Wandstärke W sowie den zumindest einen Montageabschnitt 41 mit der zumindest einen Montageöffnung 42 aufweist.

### Bezugszeichenliste

- 1: Haltevorrichtung
- 2: Befestigungseinrichtung
- 3: Befestigungsabschnitt
- 3.1: Befestigungskralle
- 3.2: Anlagenfläche
- 4: Aufnahmeabschnitt
- 4.1: Anlagenfläche
- 5: Verriegelungselement
- 6: Führungsschaft
- 6.1: offenes Ende
- 7: Aufnahmeöffnung
- 8.1, 8.2: Führungsbolzen
- 9.1, 9.2: Führungskonturabschnitt
- 10: Gewindebolzen
- 10.1: Gewindeabschnitt
- 10.2: Halteabschnitt
- 10.3: Gewindebolzenkopf
- 11: Spannmittel
- 11.1: erste Seite
- 11.2: zweite Seite
- 12: Rastscheibe
- 12.1: Ösenabschnitt
- 12.12: Ösenöffnung
- 12.2: Scheibenabschnitt
- 12.3, 12.4: Rastloch
- 13: Durchgangsöffnung
- 14: Spannreinrichtung
- 15: Rasteinrichtung
- 15.1, 15.2: Rastbolzen
- 16.1, 16.2: Hohlschraube
- 20: Verbindungsvorrichtung
- 21.1, 21.2: Gewindestange
- 22: Verstellmutter
- 23: Kontermutter
- 40: Packmittel
- 41: Montageabschnitt
- 42: Montageöffnung
- 43: Bodenfläche
- 44: Seitenwandung
- M: Querschnitt
- U: Umfangsquerschnitt
- L: Längsachse
- G: Gerade
- VP: Verriegelungsposition
- V: Außenumfangsquerschnitt, Umfangsquerschnitt
- FP: Freigabeposition
- F: Vorspannkraft
- W: Wandstärke

## Patentansprüche

1. Haltevorrichtung (1) zur lösbaren Befestigung eines zumindest einen Montageabschnitt (41) mit zumindest einer Montageöffnung (42) aufweisenden Packmittels (40) an einem Gepäckträger eines Zweirads, aufweisend wenigstens eine sich entlang einer Längsachse (L) erstreckende Befestigungseinrichtung (2) mit mindestens einem Befestigungsabschnitt (3) zur lösbaren Befestigung der Haltevorrichtung (1) an dem Gepäckträger des Zweirads und mindestens einen sich entlang der Längsachse (L) an den Befestigungsabschnitt (3) anschließenden Aufnahmeabschnitt (4), auf den das Packmittel (40) über die Montageöffnung (42) des Montageabschnittes (41) entlang der Längsachse (L) aufschiebbar ist und der einen Umfangsquerschnitt (U) aufweist, der zur verdrehungssicheren Aufnahme des Montageabschnittes (41) des Packmittels (40) auf dem Aufnahmeabschnitt (4) an einen Querschnitt (M) der zumindest einen Montagöffnung (42) des Montageabschnittes (41) angepasst ist, sowie ein Verriegelungselement (5) zur Verriegelung des Packmittels (40) an dem Aufnahmeabschnitt (4), wobei das Verriegelungselement (5) derart an dem Aufnahmeabschnitt (4) angeordnet ist, dass dieses relativ zum Aufnahmeabschnitt (4) zwischen einer Verriegelungsposition (VP) und einer Freigabeposition (FP) dreh- oder schwenkbar ist, und zwar derart, dass in der Verriegelungsposition (VP) eine Verschiebung des auf dem Aufnahmeabschnitt (4) aufgeschobenen Packmittels (40) entlang der Längsachse (L) gesperrt und in der Freigabeposition (FP) freigegeben ist, **dadurch gekennzeichnet, dass** zwei Befestigungseinrichtungen (2) mittels einer Verbindungseinrichtung (20) derart mechanisch verbunden sind, dass eine relativ zwischen den beiden Befestigungseinrichtungen (2) entlang deren jeweiligen Längsachsen (L) verlaufende Stellbewegung erzeugbar ist und dass die Verbindungsvorrichtung (20) zur Erzeugung der Stellbewegung wenigstens eine erste und eine zweite Gewindestange (21.1, 21.2) eine Verstellmutter (22) sowie eine Kontermutter (23) umfasst.

2. Haltevorrichtung (1) nach Anspruch 1, **dadurch gekennzeichnet, dass** das Verriegelungselement (5) relativ zum Aufnahmeabschnitt (4) zwischen der Verriegelungsposition (VP) und der Freigabeposition (FP) um die Längsachse (L) dreh- oder schwenkbar ausgebildet ist.

3. Haltevorrichtung (1) nach Anspruch 1 oder 2, **dadurch gekennzeichnet, dass** das Verriegelungselement (5) einen Außenumfangsquerschnitt (V) aufweist, der an den Umfangsquerschnitt (U) des Aufnahmeabschnittes (4) derart angepasst ist, dass der Aufnahmeabschnitt (4) und das Verriegelungselement (5) zumindest an ihren jeweils aufeinander zugewandten freien Stirnseiten kongruente Stirnflächen zueinander ausbilden.

4. Haltevorrichtung (1) nach Anspruch 3, **dadurch gekennzeichnet, dass** das Verriegelungselement (5) derart relativ dreh- oder schwenkbar entlang der Längsachse (L) an dem Aufnahmeabschnitt (4) vorgesehen ist, dass das Verriegelungselement (5) in der Freigabeposition (FP) fluchtend zu dem Aufnahmeabschnitt (4) angeordnet ist.

5. Haltevorrichtung (1) nach einem der Ansprüche 1 bis 4, **dadurch gekennzeichnet, dass** die Befestigungseinrichtung (2) eine Spanneinrichtung (14) zur Erzeugung einer definierten Vorspannkraft (F) aufweist, die zwischen dem Aufnahmeabschnitt (4) und dem Verriegelungselement (5) in Richtung des Aufnahmeabschnittes (4) wirkt.

6. Haltevorrichtung (1) nach Anspruch 5, **dadurch gekennzeichnet, dass** die Spanneinrichtung (14) dazu ausgebildet ist, die Vorspannkraft (F) derart zu erzeugen, dass das Verriegelungselement (5) dreh- und längsbeweglich an dem Aufnahmeabschnitt (4) vorgesehen ist.

7. Haltevorrichtung (1) nach einem der Ansprüche 1 bis 6, **dadurch gekennzeichnet, dass** die Befestigungseinrichtung (2) an der dem Befestigungsabschnitt (3) abgewandten Seite einen sich entlang der Längsachse (L) an den Aufnahmeabschnitt (4) anschließenden Führungsschaft (6) aufweist, an dem das Verrieglungselement (5) dreh- und längsbeweglich angeordnet ist.

8. Haltevorrichtung (1) nach Anspruch 7, **dadurch gekennzeichnet, dass** an dem Führungsschaft (6) Führungsbolzen (8.1, 8.2) vorgesehen sind, die in der Verriegelungsposition (VP) bzw. der Freigabeposition (FP) in einen in dem Verriegelungselement (5) vorgesehenen entsprechenden Führungskonturabschnitt (9.1, 9.2) derart eingreifen, dass das Verriegelungselement (5) in der Verriegelungsposition (VP) bzw. der Freigabeposition (FP) für eine Drehbewegung um die Längsachse (L) gesperrt ist.

9. Haltevorrichtung (1) nach einem der Ansprüche 1 bis 8, **dadurch gekennzeichnet, dass** der Befestigungsabschnitt (3) wenigstens eine Befestigungskralle (3.1) zur lösbaren Anordnung der Haltevorrichtung (1) an dem Gepäckträger des Zweirads aufweist, die in Richtung des Verriegelungselementes (5) gerichtet ist.

10. Haltevorrichtung (1) nach einem der Ansprüche 1 bis 9, **dadurch gekennzeichnet, dass** die Stellbewegung als Spreizbewegung zur lösbaren Anordnung der Haltevorrichtung (1) an dem Gepäckträger des Zweirads ausgebildet ist.

## Claims

1. A holding device (1) for detachably fastening a packaging (40) on a luggage carrier of a two-wheeled vehicle, the packaging (40) having at least one mounting section (41) with at least one mounting opening (42), , with said holding device comprising at least one fastening mechanism (2) extending along a longitudinal axis (L) and having at least one fastening section (3) for detachably fastening the holding device (1) on the luggage carrier of the two-wheeled vehicle and at least one receiving section (4), which connects to the fastening section (3) along the longitudinal axis (L) and onto which the packaging (40) can be pushed along the longitudinal axis (L) by means of the mounting opening (42) of the mounting section (41), with said receiving section having a circumferential cross section (U) adapted to a cross section (M) of the at least one mounting opening (42) of the mounting section (41) for receiving the mounting section (41) of the packaging (40) on the receiving section (4) in a rotationally fixed manner, with said holding device comprising a locking element (5) for locking the packaging (40) on the receiving section (4), wherein the locking element (5) is arranged on the receiving section (4) in such a way that it can be rotated or pivoted relative to the receiving section (4) between a locking position (VP) and a release position (FP), namely such that a displacement of the packaging (40) pushed onto the receiving section (4) is blocked along the longitudinal axis (L) in the locking position (VP) and released in the release position (FP), **characterized in that** two fastening mechanisms (2) are mechanically connected by means of a connecting mechanism (20) in such a way that a relative adjusting movement between the two fastening mechanisms (2) can be generated along their respective longitudinal axes (L), and **in that** the connecting mechanism (20) comprises at least a first and a second threaded rod (21.1, 21.2), an adjusting nut (22) and a lock nut (23) in order to generate the adjusting movement.

2. The holding device (1) according to claim 1, **characterized in that** the locking element (5) is designed so as to be rotatable or pivotable between the locking position (VP) and the release position (FP) relative to the receiving section (4) about the longitudinal axis (L).

3. The holding device (1) according to claim 1 or 2, **characterized in that** the locking element (5) has an outer circumferential cross section (V), which is adapted to the circumferential cross section (U) of the receiving section (4) in such a way that the receiving section (4) and the locking element (5) form congruent end faces at least on their respective free front sides facing one another.

4. The holding device (1) according to claim 3, **characterized in that** the locking element (5) is provided on the receiving section (4) along the longitudinal axis (L) in a relatively rotatable or pivotable manner in such a way that the locking element (5) is arranged in alignment with the receiving section (4) in the release position (FP).

5. The holding device (1) according to one of claims 1 to 4, **characterized in that** the fastening mechanism (2) comprises a tensioning device (14) for generating a defined pretensioning force (F), which acts between the receiving section (4) and the locking element (5) in the direction of the receiving section (4).

6. The holding device (1) according to claim 5, **characterized in that** the tensioning device (14) is designed for generating the pretensioning force (F) in such a way that the locking element (5) is provided on the receiving section (4) in a rotatable and longitudinally movable manner.

7. The holding device (1) according to one of claims 1 to 6, **characterized in that** the fastening mechanism (2) comprises on the side facing away from the fastening section (3) a guide shaft (6) connecting to the receiving section (4) along the longitudinal axis (L), wherein the locking element (5) is arranged on said guide shaft in a rotatable and longitudinally movable manner.

8. The holding device (1) according to claim 7, **characterized in that** guide bolts (8.1, 8.2) are provided on the guide shaft (6), wherein said guide bolts engage in the locking position (VP) and the release position (FP) into a corresponding guide contour section (9.1, 9.2) provided in the locking element (5) in such a way that the locking element (5) is blocked for a rotational movement about the longitudinal axis (L) in the locking position (VP) or the release position (FP), respectively.

9. The holding device (1) according to one of claims 1 to 8, **characterized in that** the fastening section (3) comprises at least one fastening claw (3.1), which is oriented in the direction of the locking element (5), in order to detachably arrange the holding device (1) on the luggage carrier of the two-wheeled vehicle.

10. The holding device (1) according to one of claims 1 to 9, **characterized in that** the adjusting movement is realized in the form of a spreading movement for detachably arranging the holding device (1) on the luggage carrier of the two-wheeled vehicle.

## Revendications

1. Dispositif de retenue (1), destiné à la fixation amovible d'un emballage (40) comportant au moins un segment de montage (41) pourvu d'au moins un orifice de montage (42) sur un porte-bagages d'une bicyclette, comportant au moins un système de fixation (2) s'étendant le long d'un axe longitudinal (L), pourvu d'au moins un segment de fixation (3) pour la fixation amovible du dispositif de retenue (1) sur le porte-bagages de la bicyclette et d'au moins un segment récepteur (4) se raccordant le long de l'axe longitudinal (L) sur le segment de fixation (3), sur lequel l'emballage (40) peut s'emboîter le long de l'axe longitudinal (L), via l'orifice de montage (42) du segment de montage (41) et qui présente une section transversale périphérique (U), qui pour réceptionner de manière solidaire en rotation le segment de montage (41) de l'emballage (40) sur le segment récepteur (4) est adapté à la section transversale (M) de l'au moins un orifice de montage (42) du segment de montage (41), ainsi que d'un élément de verrouillage (5), destiné à verrouiller l'emballage (40) sur le segment récepteur (4), l'élément de verrouillage (5) étant placé sur le segment récepteur (4) de telle sorte qu'il soit apte à tourner ou à pivoter par rapport au segment récepteur (4) entre une position de verrouillage (VP) et une position de libération (FP), à savoir de telle sorte que dans la position de verrouillage (VP), un coulissement de l'emballage (40) emboîté sur le segment récepteur (4) le long de l'axe longitudinal (L) soit bloqué et soit libéré dans la position de libération (FP), **caractérisé en ce que** deux systèmes de fixation (2) sont mécaniquement assemblés au moyen d'un système d'assemblage (20), de telle sorte qu'un mouvement de réglage relatif s'écoulant entre les deux systèmes de fixation (2) le long de leurs axes longitudinaux (L) respectifs puisse être généré et **en ce que**, pour générer le mouvement de réglage, le dispositif d'assemblage (20) comprend au moins une première et une deuxième tiges filetées (21.1, 21.2), un écrou de réglage (22), ainsi qu'un contre-écrou (23).

2. Dispositif de retenue (1) selon la revendication 1, **caractérisé en ce que** l'élément de verrouillage (5) est conçu en étant apte à tourner ou à pivoter autour de l'axe longitudinal (L) par rapport au segment récepteur (4) entre la position de verrouillage (VP) et la position de libération (FP).

3. Dispositif de retenue (1) selon la revendication 1 ou 2, **caractérisé en ce que** l'élément de verrouillage (5) présente une section transversale périphérique extérieure (V) qui est adaptée à la section transversale périphérique (U) du segment récepteur (4), de telle sorte qu'au moins sur leurs faces frontales libres respectivement dirigées l'une vers l'autre, le segment récepteur (4) et l'élément de verrouillage (5) forment des surfaces frontales mutuellement congruentes.

4. Dispositif de retenue (1) selon la revendication 3, **caractérisé en ce que** l'élément de verrouillage (5) est prévu en étant apte à tourner ou à pivoter le long de l'axe longitudinal (L) sur le segment récepteur (4), de telle sorte que dans la position de libération (FP), l'élément de verrouillage (5) soit placé en alignement sur le segment récepteur (4).

5. Dispositif de retenue (1) selon l'une quelconque des revendications 1 à 4, **caractérisé en ce que** le système de fixation (2) comporte un système tenseur (14), destiné à générer une force de précontrainte (F) définie, qui agit entre le segment récepteur (4) et l'élément de verrouillage (5), en direction du segment récepteur (4).

6. Dispositif de retenue (1) selon la revendication 5, **caractérisé en ce que** le système tenseur (14) est conçu pour générer la force de précontrainte (F) de telle sorte que l'élément de verrouillage (5) soit prévu de manière mobile en rotation et en longueur sur le segment récepteur (4).

7. Dispositif de retenue (1) selon l'une quelconque des revendications 1 à 6, **caractérisé en ce que** sur le côté opposé au segment de fixation (3), le système de fixation (2) comporte une tige de guidage (6) se raccordant le long de l'axe longitudinal (L) sur le segment récepteur (4), sur laquelle l'élément de verrouillage (5) est placé de manière mobile en rotation et en longueur.

8. Dispositif de retenue (1) selon la revendication 7, **caractérisé en ce que** sur la tige de guidage (6) sont prévus des boulons de guidage (8.1, 8.2), qui dans la position de verrouillage (VP) ou dans la position de libération (FP) s'engagent dans un segment de contour de guidage (9.1, 9.2) correspondant prévu dans l'élément de verrouillage (5), de telle sorte que dans la position de verrouillage (VP) ou dans la position de libération (FP), l'élément de verrouillage (5) soit bloqué pour un mouvement de rotation autour de l'axe longitudinal (L).

9. Dispositif de retenue (1) selon l'une quelconque des revendications 1 à 8, **caractérisé en ce que** le segment de fixation (3) comporte au moins une griffe de fixation (3.1) pour un placement amovible du dispositif de retenue (1) sur le porte-bagages de la bicyclette, qui est orientée dans la direction de l'élément de verrouillage (5).

10. Dispositif de retenue (1) selon l'une quelconque des revendications 1 à 9, **caractérisé en ce que** le mouvement de réglage est réalisé sous la forme de mouvement de déploiement, pour le placement amovible du dispositif de retenue (1) sur le porte-bagages de la bicyclette.
